# EUROPEAN PATENT APPLICATION

(11) **EP 4 598 155 A1**
(43) Date of publication of application: **06.08.2025**
(21) Application number: 25151288.5
(22) Date of filing: 10.01.2025
(51) Int. Cl.: H04W 52/42, H04B 7/06

(54) **TRANSMITTER AND CONTROL METHOD THEREFOR**

(30) Priority: 01.02.2024 US 202463627838 P; 26.12.2024 US 202419002015
(71) Applicant: MediaTek Inc., Hsinchu City, 30078 (TW)
(72) Inventor: LIAO, Ching-Chun, Hsinchu City (TW); HSIAO, Po-Chung, Hsinchu City (TW); CHEN, Yen-Liang, Hsinchu City (TW)
(74) Representative: Hoefer & Partner Patentanwälte mbB

(57) **Abstract**

A transmitter (1) is provided and includes a plurality of transmission paths (12, 13), a configure module (10) and a control module (11). Each of the transmission paths (12, 13) comprises a corresponding antenna (125, 135). The configure module (10) is configured to obtain a communication-related indicator during the transmitter operating in a multi-path transmission mode, in which multiple transmission paths among the plurality of transmission paths (12, 13) are enabled, and adaptively generate configuration information (D10) to a control module (11) in response to changes of the communication-related indicator for dynamically adjusting the complex gain setting of the multiple transmission paths (12, 13), wherein the complex gain setting comprises at least one gain value and at least one phase value. The control module (11) is configured to generate corresponding transmission data (DOUT30, DOUT31) for the multiple transmission paths (12, 13) according to received input data (DIN) and the configuration information (D10).

## Description

### CROSS REFERENCE TO RELATED APPLICATIONS

This application claims the benefit of U.S. Provisional Application No. 63/627,838, filed February 1, 2024, the entirety of which is/are incorporated by reference herein.

### BACKGROUND OF THE INVENTION

### Field of the Invention

The invention relates to a transmitter, and more particularly to a control method for controlling a transmitter to operate in a single-path transmission mode or a multi-path transmission mode.

### Description of the Related Art

5G NR (new radio) communication is deployed in a high frequency band than 4G communication. In a communication device, as the frequency becomes higher, attenuation in the signals transmitted by the communication device is severer, which induces degradation of the performance of the communication device. Thus, how to improve performance of communication devices operating in a high frequency band is an important issue.

### BRIEF SUMMARY OF THE INVENTION

A transmitter and a method according to the invention are defined in the independent claims. The dependent claims define preferred embodiments thereof. An exemplary embodiment of a transmitter is provided. The transmitter comprises a plurality of transmission paths, a configure module and a control module. Each of the transmission paths comprises a corresponding antenna. The configure module is configured to obtain a communication-related indicator during the transmitter operating in a multi-path transmission mode, in which multiple transmission paths among the plurality of transmission paths are enabled, and adaptively generate configuration information to a control module in response to changes of the communication-related indicator for dynamically adjusting the complex gain setting of the multiple transmission paths, wherein the complex gain setting comprises at least one gain value and at least one phase value. The control module is configured to receive input data and the configuration information, and generate corresponding transmission data for the multiple transmission paths according to the input data and the configuration information.

An exemplary embodiment of a control method for a transmitter is provided. The control method comprises steps of providing a plurality of transmission paths, each of which comprises a corresponding antenna; using a configure module to obtain a communication-related indicator during the transmitter operating in a multi-path transmission mode, in which multiple transmission paths among the plurality of transmission paths are enabled, and adaptively generate configuration information to a control module in response to changes of the communication-related indicator for dynamically adjusting the complex gain setting of the multiple transmission paths, wherein the complex gain setting comprises at least one gain value and at least one phase value; and using the control module to generate corresponding transmission data for the multiple transmission paths according to received input data and the configuration information.

A detailed description is given in the following embodiments with reference to the accompanying drawings.

### BRIEF DESCRIPTION OF THE DRAWINGS

The invention can be more fully understood by reading the subsequent detailed description and examples with references made to the accompanying drawings, wherein:
FIG. 1 shows an exemplary embodiment of a transmitter;
FIG. 2 is a schematic diagram showing that a transmitter operates in a single-path transmission mode;
FIG. 3 is a schematic diagram showing that a transmitter operates in a multi-path transmission mode;
FIG. 4 shows an exemplary embodiment of a control method for a transmitter; and
FIG. 5 shows another exemplary embodiment of a control method for a transmitter.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

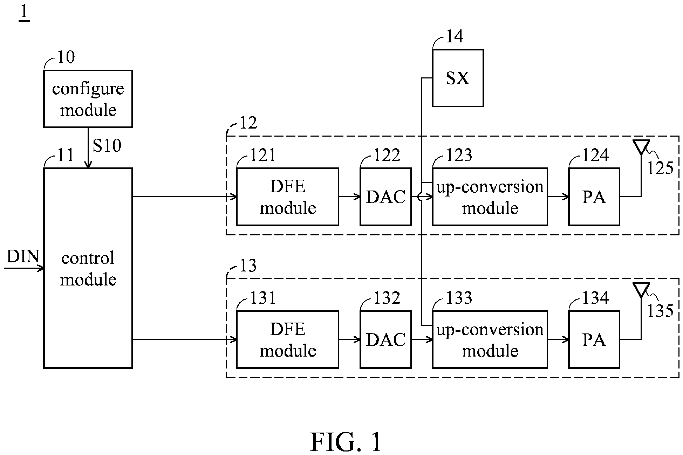

FIG. 1 shows an exemplary embodiment of a transmitter. Referring to FIG. 1, a transmitter 1 comprises a configure module 10, a control module 11, and a plurality of transmission paths. The transmitter 1 can be part of a communication device (such as, user device (UE)) that is capable of transmitting radio frequency (RF) signals, for example, a mobile phone, a tablet, a laptop, or a smart witch. In the embodiment, two transmission paths 12 and 13 are taken as an example to explain the operation of the transmitter 1. That is, the examples in the embodiments describe a plurality of transmission paths using two transmission paths as an example. However, there is no limitation on the number of transmission paths, depending on the UE hardware capability, for example, the plurality of transmission paths could also be three paths, four paths, or even more paths. It is noted that this disclosure pertains to a technology that enables the transmitter to dynamically adjust the complex gain setting of the enabled transmission paths in a multi-path transmission mode, wherein the complex gain setting includes at least one gain and at least one phase for the transmission paths. For example, during the multi-path transmission mode, the UE (specifically, the transmitter within the UE) monitors changes in at least one performance indicator, and dynamically adjusts the complex gain setting of the enabled transmission paths in response to the changes to enhance transmission performance. In the embodiment, both gain and phase can be adjusted either jointly or individually.

Referring to FIG. 1, the transmission path 12 comprises a digital front-end (DFE) module 121, a digital-to-analog converter (DAC) 122, an up-conversion module (such as, at least one mixer) 123, a power amplifier (PA) 124, and an antenna 125. The transmission path 13 comprises a digital front-end (DFE) module 131, a digital-to-analog converter (DAC) 132, an up-conversion module (such as, at least one mixer) 133, a power amplifier (PA) 134, and an antenna 135. The transmitter 1 further comprises a synthesizer (SX) 14 for frequency synthesis to provide corresponding frequency signals to the up-conversion modules 123 and 133. The structures of the transmission paths 12 and 13 shown in FIG. 1 are taken as an example, without limitation in the present disclosure. The transmission paths 12 and 13 can be implemented by other structures that can transmit RF signals according to the received data from the control module 11. The operations of the DFE modules 121 and 131, the DACs 122 and 132, the up-conversion modules 123 and 133, the PAs 124 and 134, and the antennas 125 and 135 have been known by those skilled in the art, thus, the related description is omitted here.

The configure module 10 is configured for obtaining a plurality of communication-related parameters. Preferably, some of the plurality of communication-related parameters are provided by a network where the transmitter 1 is located, some of the plurality of communication-related parameters are monitored and obtained by a monitor in the transmitter 1, and/or some of the plurality of communication-related parameters are determined by the transmitter 1. For example, the communication-related parameters may comprise at least one power-related parameter and/or at least one channel-related parameter. For example, the power-related parameter may comprise at least one of target transmit power (also referred to target TxP), transmitted transmit power (also referred to transmitted TxP), power headroom (PHR), reference signal received power (RSRP), power limit, power class (PC), and maximum power reduction (MPR). For another example, the channel-related parameter may comprise at least one of throughout (Tput), modulation and coding scheme (MCS), resource block (RB), and block error rate (BLER). The communication-related parameters may further comprise band, channel bandwidth (CBW) and/or subcarrier spacing (SCS).

### Single-path transmission mode/multi-path transmission mode

According to the embodiment, the configure module 10 is configured to determine whether the transmitter 1 is operated in the single-path transmission mode or the multi-path transmission mode by determining whether a first predetermined condition is met according to a first communication-related indicator, which is obtained according to at least one communication-related parameter. For example, in response to the first predetermined condition being met, the transmitter 1 may operate in the multi-path transmission mode, i.e., multiple transmission paths are enabled, otherwise, the transmitter 1 may operate in the single-path transmission mode, i.e., only one transmission path is enabled. Preferably, the first communication-related indicator for the first predetermined condition is a power indicator which is obtained according to at least one power-related parameter. The embodiments of this disclosure will be described using the power indicator as an example of the first communication-related indicator, but it is not limited to this. Specifically, the configure module 10 is configured to determine whether the first predetermined condition is met by comparing the power indicator and corresponding threshold, and thus generate a selection signal S10 according to the determination or comparison result, to indicate/control the transmitter 1 operating in/entering the single-path transmission mode or the multi-path transmission mode. It is noted that the single-path transmission mode indicates that one among the plurality of transmission paths is enabled and the multi-path transmission mode indicates that multiple among the plurality of transmission paths are enabled.

There is at least one threshold defined for the first predetermined condition. For example, the configure module 10 may define a first threshold for the transmitter 1 operating in the multi-path transmission mode and a second threshold for the transmitter 1 operating in the single-path transmission mode. In cases where the first communication-related indicator (for example, the power indicator) for the first predetermined condition is the target TxP or the transmitted TxP, when the target TxP or the transmitted TxP, which is obtained in the single-path transmission mode, is larger than a first threshold THR₁, the first predetermined condition is met, and the configure module 10 determines that the transmitter 1 exits from the single-path transmission mode and enters the multi-path transmission mode; similarly, when the target TxP or the transmitted TxP, which is obtained in the multi-path transmission mode, is less than the first threshold THR₁, the first predetermined condition is not met (specifically, the target TxP or the transmitted TxP is less than a second threshold THR₂, which can be regarded as another first predetermined condition is met), and the configure module 10 determines that the transmitter 1 exits from the multi-path transmission mode and enters the single-path transmission mode, as shown in Table 1. In the embodiment of the present disclosure, the determination of whether a condition is met may adopt a hysteresis count, that is, the condition is considered met only when the condition is met for multiple consecutive determinations (for example, M times, such as M=3, but not limited thereto), so as to avoid a ping-pong effect.

In cases where the first communication-related indicator (for example, the power indicator) for the first predetermined condition is the PHR or the RSRP, when the PHR or the RSRP, which is obtained in the single-path transmission mode, is less than another first threshold THR₁', the first predetermined condition is met, and the configure module 10 determines that the transmitter 1 exits from the single-path transmission mode and enters the multi-path transmission mode; similarly, when the PHR or the RSRP, which is obtained in the multi-path transmission mode, is larger than the another first threshold THR₁', the first predetermined condition is not met (specifically, the PHR or the RSRP is larger than a second threshold THR₂', which can be regarded as another first predetermined condition is met), and the configure module 10 determines that the transmitter 1 exits from the multi-path transmission mode and enters the single-path transmission mode, as shown in Table 1.

**Table 1**

| | | |
|---|---|---|
| first communication-related indicator | multi-path transmission mode | single-path transmission mode |
| target TxP or transmitted TxP | target TxP or transmitted TxP >THR₁ | target TxP or transmitted TxP < THR₂ |
| PHR or RSRP | PHR or RSRP < THR₁' | PHR or RSRP > THR₂' |

In the above embodiment, the first communication-related indicator (for example, power indicator) for the first predetermined condition may be single one communication-related parameter, for example, a power-related parameter, such as the target TxP or transmitted TxP, PHR or RSRP. In other embodiments, the first communication-related indicator for the first predetermined condition (for example, power indicator) may be obtained by combining or weighting multiple communication-related parameters.

Preferably, the values of the first and second thresholds (for example, THR₁ and THR₂, or, THR₁' and THR₂') are equal (that is, the second threshold may be not required). Alternatively preferably, the values of the first and second thresholds (for example, THR₁ and THR₂, or, THR₁' and THR₂') are unequal for preventing the transmitter 1 from switching between the single-path transmission mode and the multi-path transmission mode frequently (ping-pong effect). In particular, the second threshold is less than the first threshold. For example, THR₂ < THR₁ and THR₂' > THR₁'.

The values of the first and second thresholds (for example, THR₁ and THR₂, or, THR₁' and THR₂') may be predetermined based on which at least one communication-related parameter the first communication-related indicator is related to. In the embodiment, at least one of the values of the first and second threshold may be obtained by combining or weighting multiple communication-related parameters.

Preferably, when the first communication-related indicator (for example, the power indicator) for the first predetermined condition is the target TxP or the transmitted TxP, the value of the THR₁ is obtained by combining the power limit and the PHR. For example, the THR₁ is obtained by the difference between the power limit and the PHR (THR₁=power limit-PHR).

Alternatively preferably, when the first communication-related indicator (for example, the power indicator) is the target TxP or the transmitted TxP, the values of the THR₁ and THR₂ are obtained by combining the power class and the MPR (Maximum Power Reduction). For example, the value of the THR₁ is defined as [(P_{powerclass}-3)-x]dBm, and the value of the THR₂ is defined as [(P_{powerclass}-3)-x-TxP_{off,thd}] dBm. P_{powerclass} indicates the maximum capability per the power class. For example, when the value of the power class is 1.5, the maximum capability is 29dBm (P_{powerclass}(PC1.5)=29dBm); when the value of the power class is 2, the maximum capability is 26dBm (P_{powerclass}(PC2)=26dBm); when the value of the power class is 3, the maximum capability is 23dBm (P_{powerclass}(PC3)=23dBm). The term "-3(dB)" is provided for equal power of the transmission paths 12 and 13. The term "x(dB)" is determined by the RB (Resource Block) allocation/Modulation in a given MPR table for the corresponding power class. The reserved margin TxP_{off,thd} is provided to cause the values of the thresholds THR₁ and THR₂ unequal, thereby preventing the above ping-pong effect.

The configure module 10 is configured to provide the selection signal S10, which indicates that the transmitter 1 operates in the single-path transmission mode or the multi-path transmission mode, to the control module 11.

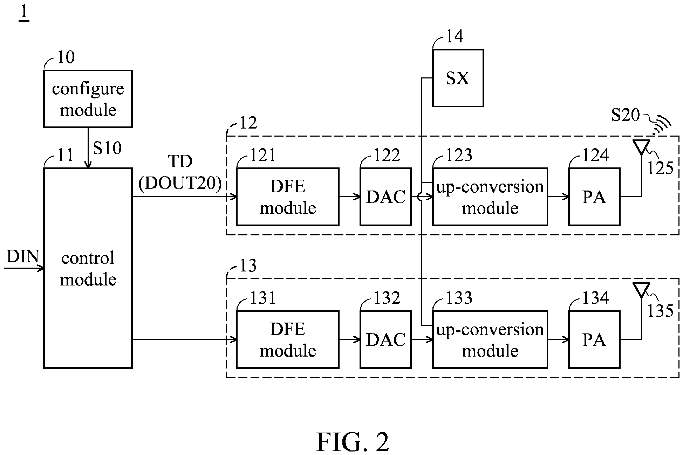

The control module 11 receives input data DIN and further receives the selection signal S10. The control module 11 generates corresponding transmission data TD according to the input data DIN and operates in corresponding transmission mode according to the selection signal S10. For example, when the selection signal S10 indicates the single-path transmission mode, the control module 11 generates and provides the transmission data TD corresponding to one of the transmission paths 12 and 13. Referring to FIG. 2, for example, the control module 11 provides the transmission data TD to the transmission path 12 as output data DOUT20 in the single-path transmission mode. Then, the transmission path 12 transmits an RF signal S20 according to the output data DOUT20.

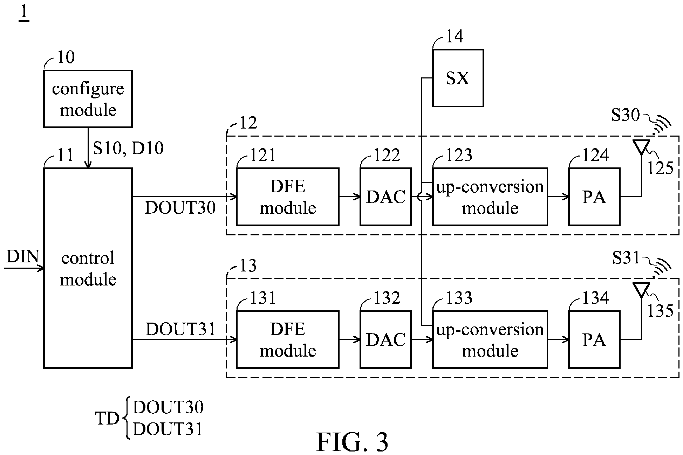

When the selection signal S10 indicates the multi-path transmission mode, the transmission data TD comprises output data DOUT30 and output data DOUT31 generated according to the input data DIN, as shown in FIG. 3. In the multi-path transmission mode, the control module 11 provides the output data DOUT30 to the transmission path 12 and further provides the output data DOUT31 to the transmission path 13. Then, the transmission path 12 transmits an RF signal S30 according to the output data DOUT30, and the transmission path 13 transmits an RF signal S31 according to the output data DOUT31.

In a first case where the transmitter 1 operates in the single-path transmission mode, the complex gain mechanism is deactivated. In a second case where the transmitter 1 operates in the multi-path transmission mode, the complex gain mechanism is activated/enabled. In the second case, the configure module 10 may be further configured to provide configuration information D10 for indicating a complex gain setting of the multiple transmission paths to the control module 11. In the embodiment, the complex gain setting comprises at least one gain value and at least one phase value (collectively referred to as a complex gain). When the transmitter 1 enters the multi-path transmission mode from the single-path transmission mode, the configure module 10 should determine (select) at least one complex gain setting of the multiple transmission paths and accordingly generates the configuration information D10 based on the determined complex gain setting, wherein the complex gain setting comprises the at least one gain value and the at least one phase value. In the embodiment, the configure module 10 transmits the configuration information D10 to the control module 11, and the control module 11 generates the transmission data TD (for example, the transmission data TD comprises output data DOUT30 and DOUT31) according to the configuration information D10. In addition, the configure module 10 obtains corresponding performance indicators for each of the at least one complex gain setting. Consequently, the complex gain setting with the best performance indicator is selected as an optimal complex gain setting for the multi-path transmission mode. Thus, the transmitter finally operates in the multi-path transmission mode with the optimal complex gain setting.

In the multi-path transmission mode, the control module 11 determines the gains of the output data DOUT30 and the output data DOUT31 of the transmission data TD according to the at least one gain value of the complex gain setting indicated by the configuration information D10 and/or further determines the phase values of the output data DOUT30 and the output data DOUT31 (for example, the delay between the output data D30 and the output data D31) according to the at least one phase value of the complex gain setting indicated by the configuration information D10.

Preferably, total power can be shared into multiple transmission paths, and the configure module 10 can determine the gain value of the at least one complex gain setting through calculation related power sharing setting (such as, setting equal gain or setting unequal gain) or through a look-up table according to at least one communication-related parameter. For example, the calculation is related to at least one of the parameters Target TxP, Transmit TxP, PHR, RSRP, P_{powerclass}, MPR table (including RB allocation, modulation).

In the embodiment, the configure module 10 can determine the phase value of the at least one complex gain setting through calculation related phase setting or through a look-up table according to at least one communication-related parameter. For example, the calculation is related to at least one of the parameters Tput, MCS, RB, BLER, CBW, and SCS. In addition, different combinations of parameters band, CBW, and SCS may correspond to different look-up tables, wherein a single look-up table includes at least two complex gain settings and the complex gain settings in the look-up table are predetermined.

The following is an example of the implementation of the look-up table. For example, the configure module 10 determines the complex gain setting by searching a look-up table in the multi-path transmission mode, for example, based on communication-related parameters band, CBW, and SCS. For ease of explanation and understanding, two transmission paths are taken as an example, and it is assumed that the equal gain is set between the two transmission paths, therefore, an illustrative look-up table can be represented as Table 2. However, the present disclosure is not limited thereto. For example, the look-up table of the two transmission paths may also be as represented as Table 3.

**Table 2**

| Complex gain settings (Gears) | Gain settings | Phase settings |
|---|---|---|
| Gear 1 | Gain₁ | Phase₁ |
| Gear 2 | Gain₂ | Phase₂ |
| Gear 3 | Gains | Phases |
| Gear 4 | Gains | Phase₄ |

**Table 3**

| Complex gain settings (Gears) | Gain settings | | Phase settings | |
|---|---|---|---|---|
| Gear 1 | Gain1ₚₐₜₕ₁ | Gain1ₚₐₜₕ₂ | Phaseₚₐₜₕ₁ | Phase1ₚₐₜₕ₂ |
| Gear 2 | Gain2ₚₐₜₕ₁ | Gain2ₚₐₜₕ₂ | Phase2ₚₐₜₕ₁ | Phase2ₚₐₜₕ₂ |
| Gear 3 | Gain3ₚₐₜₕ₁ | Gain3ₚₐₜₕ₂ | Phase3ₚₐₜₕ₁ | Phase3ₚₐₜₕ₂ |
| Gear 4 | Gain4ₚₐₜₕ₁ | Gain4ₚₐₜₕ₂ | Phase4ₚₐₜₕ₁ | Phase4ₚₐₜₕ₂ |

The loop-up table comprises a plurality of gears (i.e., multiple sets of complex gain settings), each of which corresponds to one candidate set of at least one gain value and at least one phase value. The following is an example using Table 2 as an example. The configure module 10 selects one gear and generates the configuration information D10 according to the corresponding gain value and the corresponding phase value in the selected gear. The control module 11 determines the gains of the output data DOUT30 and the output data DOUT31 and the delay between output data DOUT30 and the output data DOUT31 according to the configuration information D10. Then, the transmission path 12 transmits the RF signal S30 according to the output data DOUT30, and the transmission path 13 transmits the RF signal S31 according to the output data DOUT31. Taking throughout (Tput) as an example of the performance indicator, the transmitter 1 monitors the throughout (Tput) corresponding to the selected gear to obtain a Tput value. The disclosure should be not limited this, for example, the performance indicator can also be associated with another performance-related parameter, such as block error rate (BLER), wherein the lower the BLER, the better the performance. After obtaining the Tput value at the selected gear, the configure module 10 may switch to other gears in the lookup table and continue to monitor the corresponding Tput value.

When all the gears in the look-up table have been applied (such as, sequentially set Gear 1 → Gear 2 → Gear 3 → Gear 4) and the respective Tput values corresponding to the gears are obtained (such as Tput_{Gear1}, Tput_{Gear2}, Tput_{Gear3}, Tput_{Gear4}), the configure module 10 determines the gear with the highest Tput value (i.e., indicating best performance) as an optimal gear, that is, The complex gain setting corresponding for the optimal gear can be served as an optimal complex gain setting for the multiple transmission paths. Thus, after the optimal complex gain determined, the transmitter operates in the multi-path transmission mode with the optimal complex gain setting. In addition, an initial Tput value (as an example of performance indicator) corresponding to the optimal complex gain setting can be taken as a reference Tput value Info_{LAST}, for monitoring the changes of performance indicator.

In the multi-path transmission mode, the performance of transmitter or UE can be periodically monitored, such as, at every first predetermined interval. During the transmitter operating with the optimal complex gain setting in the multi-path transmission mode, the originally optimal complex gain setting may become unsuitable due to changes in channel conditions or data traffic or scenario changes. Thus, a performance degradation detection and/or regular check may be provided in the multi-path transmission mode for avoiding performance degradation.

### Performance degradation detection

According to the embodiment, in the multi-path transmission mode, the configure module 10 determines whether a second predetermined condition (for example, the second predetermined condition is a condition for the performance degradation detection) is met according to a second communication-related indicator. Preferably, the second communication-related indicator for the second predetermined condition is a performance indicator which is obtained according to at least one channel-related parameter.

In the embodiment, a third threshold can be determined for the second predetermined condition. As shown in Table 4, in a case where the second communication-related indicator for the second predetermined condition is a performance indicator which is correlated with at least one channel-related parameter, such as the throughout (Tput), the MCS, or the RB, when the variation (ΔTput, ΔMCS, or ΔRB) of the throughout (Tput), the MCS, or the RB is less than a third threshold THR₃ in consecutive M times, the second predetermined condition is met (which indicates there is a need to adjust complex gain setting as the performance indicator becomes worse), and the configure module 10 controls the transmitter 1 to enter the dynamic adjustment stage and adjusts the complex gain setting at the dynamic adjustment stage. Also as shown in Table 4, in a case where the second communication-related indicator (for example, the performance indicator) for the second predetermined condition is the BLER (block error rate), when the variation (ΔBLER) of the BLER is larger than another third threshold THR₃' in consecutive M times, the second predetermined condition is met (which indicates there is a need to adjust complex gain setting as BLER becomes worse), and the configure module 10 controls the transmitter 1 to enter the dynamic adjustment stage and adjusts the complex gain setting at the dynamic adjustment stage. Preferably, M is a positive integer (such as, 1, 2, 3...), for example, M is equal to 3 (M=3).

**Table 4**

| second communication-related indicator | performance degradation detection | regular check |
|---|---|---|
| Tput, MCS, or RB | ΔTput, ΔMCS, or ΔRB < THR₃ in consecutive M times | ΔTput, ΔMCS, or ΔRB > THR₄ N times cumulatively |
| BLER | ΔBLER > THR₃' in consecutive M times | ΔBLER < THR₄' N times cumulatively |

Preferably, the value of the third threshold (such as, THR₃ and THR₃') can be determined based on which parameter the second communication-related indicator is related to. In the embodiment, the value of the third threshold (such as, THR₃ and THR₃') can be obtained by combining or weighting second communication-related indicators.

Preferably, when the second communication-related indicator (for example, performance indicator) for the second predetermined condition is the throughout (Tput), the value of the third threshold THR₃ can be obtained by weighting the values of the throughout (Tput) which are obtained continuously. For example, in one example, the third threshold THR₃ is equal to 0.5*Tput(n)+0.5Tput(n-1) (THR₃=0.5*Tput(n)+0.5Tput(n-1)), wherein Tput(n) represents the Tput value obtained in the current instance (the nth instance), while Tput(n-1) represents the Tput value obtained in the previous instance (the (n-1)th instance).

In the above embodiment, the second communication-related indicator (for example, performance indicator) for the second predetermined condition is single one communication-related parameter, for example, a channel-related parameter. In other embodiments, the second communication-related indicator (for example, performance indicator) for the second predetermined condition may be obtained by combining or weighting communication-related parameters. For example, the second communication-related indicator (for example, performance indicator) is a throughout-based (Tput-based) indicator Info (also referred as Tput value) obtained by multiplying the MCS and the physical resource block (PRB) (for example, Info(t)=MCS(t)*PRB(t), wherein t represents any instance), but the present disclosure is not limited to this. In one example, when the value which is determined by dividing the difference (ΔInfo(t)) between the current Tput value Info(t) and a reference Tput value Info_{LAST} corresponding to the initial complex gain setting of the multi-path transmission mode by the Info_{LAST} (i.e., ΔInfo(t)/Info_{LAST}) is less than the threshold THR₃ in consecutive M times, the second predetermined condition is met, and the configure module 10 controls the transmitter 1 to enter the dynamic adjustment stage and adjusts the complex gain at the dynamic adjustment stage.

### Regular check

As described above, after the transmitter enters the multi-path transmission mode, the transmitter will operate with the determined optimal complex gain setting, however, as time goes by, for example, due to changes in usage scenarios, the original optimal complex gain setting may become inappropriate. Thus, a regular check may also be provided in the multi-path transmission mode to avoid deadlock.

Preferably, in the multi-path transmission mode, the configure module 10 determines whether a third predetermined condition (for example, the third predetermined condition is a condition for the regular check) is met according to a second communication-related indicator. Preferably, the second communication-related indicator for the third predetermined condition is a performance indicator which may be obtained according to at least one channel-related parameter.

The configure module 10 defines a fourth threshold for the third predetermined condition. As shown in Table 4, in a case where the second communication-related indicator for the third predetermined condition is a channel-related parameter, such as the throughout (Tput), the MCS, or the RB, when the variation (ΔTput, ΔMCS, or ΔRB) of the throughout (Tput), the MCS, or the RB is larger than the fourth threshold THR₄ N times cumulatively, the third predetermined condition is met, and the configure module 10 controls the transmitter 1 to enter the dynamic adjustment stage and adjusts the complex gain setting at the dynamic adjustment stage. As shown in Table 4, in a case where the second communication-related indicator for the third predetermined condition is the BLER, when the variation (ΔBLER) of the BLER is less than the fourth threshold THR₄' N times cumulatively, the third predetermined condition is met, and the configure module 10 controls the transmitter 1 to enter the dynamic adjustment stage and adjusts the complex gain setting at the dynamic adjustment stage for adapting the current scenario. Preferably, N is larger than M, for example, N is equal to 100 (N=100), M=3.

The value of the fourth threshold (such as THR₄/THR₄') may be determined based on which parameter the second communication-related indicator is. In the embodiment, the value of the threshold THR₄ may be obtained by combining or weighting communication-related parameters.

In the above embodiment, the second communication-related indicator for the third predetermined condition may be single one communication-related parameter, for example, a channel-related parameter. In other embodiments, the second communication-related indicator for the third predetermined condition may be obtained by combining or weighting communication-related parameters. For example, the second communication-related indicator is the throughout-based (Tput-based) indicator Info(t) (for example, Info(t)=MCS(t)*PRB(t)). In one example, when the value of (ΔInfo(t)/Info_{LAST}) is larger than the threshold THR₄ N times cumulatively, the third predetermined condition is met, and the configure module 10 controls the transmitter 1 to enter the dynamic adjustment stage and adjusts the complex gain setting for the current scenario at the dynamic adjustment stage.

### Dynamic adjustment stage

Preferably, in response to the second or third predetermined condition being met, it indicates that the originally optimal complex gain setting applied to the multiple transmission paths may not be optimal, and the transmitter 1 can enter a dynamic adjustment stage to re-determine a new optimal complex gain setting.

In details, similar to the process of determining the optimal complex gain setting when the transmitter enters multi-path transmission mode from single-path transmission mode, the configure module 10 may select another gear (i.e., another complex gain setting) in the look-up table or by calculation and provide corresponding configuration information D10 to the control module 11 to adjust the complex gain setting of the multiple transmission paths. Consequently, the control module 11 transmits output data DOUT30 and DOUT31 respectively through the transmission paths 12 and 13 according to the gain value and the phase value corresponding to another gear. Preferably, the Tput value (as one example of performance indicator) corresponding to another gear may be measured by the configure module 10 at every second predetermined interval (for example, the second predetermined interval can be lower than or equal the first predetermined interval), after obtaining the Tput value at another gear, the configure module 10 may switch to other gears and continue to monitor the corresponding Tput value. Finally, the respective performance indicators under different complex gain settings are obtained. Consequently, another optimal complex gain setting with best performance indicator from multiple complex gain setting is determined, and the transmitter or UE may operate with the re-determined optimal complex gain for the multiple transmission paths.

According to the above embodiments, the transmitter 1 can selectively operate in the single-path transmission mode or the multi-path transmission mode according to at least one communication-based indicator. At the multi-path transmission mode, the complex gain including a gain value and a phase value can be dynamically adjusted to adapt the current channel condition, data traffic, or scenario, which can effectively prevent signal attenuation and improve the performance of the transmitter 1. Thus, the coverage and transmission performance of the transmitter 1 can be improved.

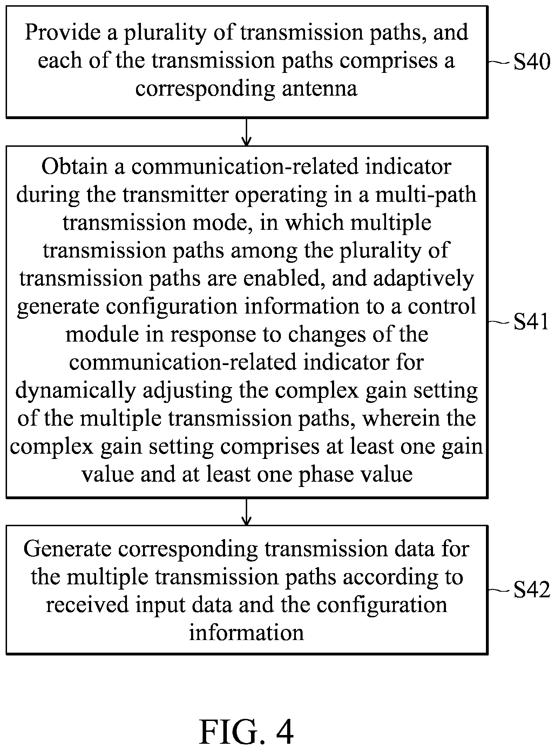

FIG. 4 shows an exemplary embodiment of a control method for a transmitter. Firstly, a plurality of transmission paths are provided, and each of the transmission paths comprises a corresponding antenna (Step S40). the configure module 10 is used to obtain a communication-related indicator during the transmitter operating in a multi-path transmission mode, in which multiple transmission paths among the plurality of transmission paths are enabled, and adaptively generate configuration information to a control module in response to changes of the communication-related indicator for dynamically adjusting the complex gain setting of the multiple transmission paths, wherein the complex gain setting comprises at least one gain value and at least one phase value. (Step S42). The control module 11 is used to generate corresponding transmission data for the multiple transmission paths according to received input data and the configuration information.

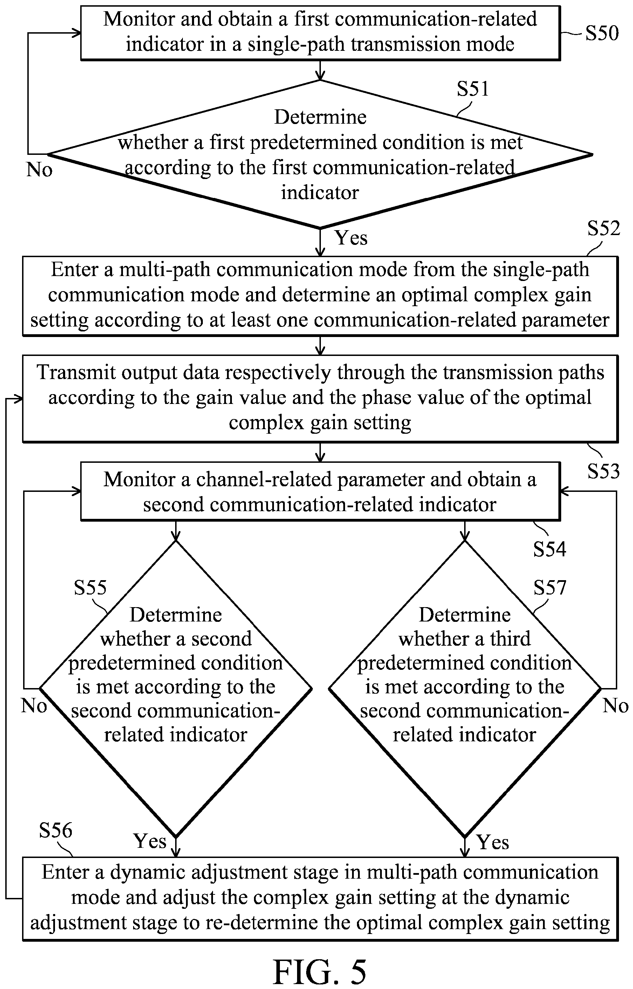

FIG. 5 shows an exemplary embodiment of a control method for a transmitter. The control method will be illustrated by referring to FIGs. 1-3 and 5. In the description below, some steps may be omitted. For ease of understanding, the following is an example in which the UE or transmitter is in a single-path transmission mode, but the present disclosure is not limited thereto. For example, it may be modified to similar embodiments operating in a multi-path transmission mode.

First, the configure module 10 may monitor and obtain a first communication-related indicator (such as, a power-related indicator) in a single-path transmission mode (Step S50). Preferably, the first communication-related indicator in Step S50 is related with at least one power-related parameter (such as, target TxP, transmitted TxP, PHR, RSRP, power limit, PC, and MPR). The configure module 10 determines whether a first predetermined condition is met according to the first communication-related indicator (Step S51). For example, the configure module 10 determines whether the first communication-related indicator is larger than a first threshold THR₁, thereby determining whether the first predetermined condition is met. When the configure module 10 determines that the first predetermined condition is not met according to the first communication-related indicator (Step S51-No), the control method proceeds to Step S50 to monitor the first communication-related indicator continuously at every predetermined interval.

When the configure module 10 determines that the first predetermined condition is met according to the first communication-related indicator (Step S51-Yes), the configure module 10 controls the transmitter 1 to enter a multi-path communication mode from the single-path communication mode and determines an optimal complex gain setting from multiple complex gain settings according to at least one communication-related parameter (Step S52). For example, the communication-related parameter in Step S52 is the throughout (Tput) of the transmitter 1. Then, the control module 11 transmits output data DOUT30 and DOUT31 respectively through the transmission paths 12 and 13 according to the gain value and the phase value of the optimal complex gain setting (Step S53).

After the optimal complex gain setting is applied, the configure module 10 monitors a channel-related parameter and obtains a second communication-related indicator, such as, a performance indicator, specifically, Tput (Step S54). In the embodiment, the second communication-related indicator in Step S54 is associated with a channel-related parameter. The configure module 10 determines whether a second predetermined condition is met according to the second communication-related indicator (Step S55). For example, the configure module 10 determines whether the Tput value is less than a third threshold THR₃ in consecutive M times, thereby determining whether the second predetermined condition is met. When the configure module 10 determines that the second predetermined condition is not met according to the second communication-related indicator (Step S55-No), the control method proceeds to Step S54 to monitor the channel-related parameter and obtain the second communication-related indicator continuously.

In one aspect, when the configure module 10 determines that the second predetermined condition (for example, the second predetermined condition is a condition for the performance degradation detection) is met according to the second communication-related indicator (Step S55-Yes), the configure module 10 controls the transmitter 1 to enter a dynamic adjustment stage in multi-path communication mode and adjusts the complex gain setting at the dynamic adjustment stage (Step S56). Thus, similar to the process of determining the optimal complex gain setting when the transmitter enters multi-path transmission mode from single-path transmission mode, a new optimal complex gain setting is re-determined.

In another aspect, the configure module 10 may further determine whether a third predetermined condition (for example, the third predetermined condition is a condition for the regular check) is met according to the second communication-related indicator (Step 57). For example, the configure module 10 determines whether the Tput value is greater than a fourth threshold THR₄ N times cumulatively, thereby determining the third predetermined condition is met. When the configure module 10 determines that the third predetermined condition is not met according to the second communication-related indicator (Step S57-No), the control method proceeds to Step S54 to monitor the channel-related parameter and obtain the second communication-related indicator continuously.

In one aspect, when the configure module 10 determines that the third predetermined condition is met according to the second communication-related indicator (Step S57-Yes), the configure module 10 controls the transmitter 1 to enter the dynamic adjustment stage in multi-path communication mode and adjusts the complex gain setting at the dynamic adjustment stage (Step S56). After Step S56 is performed, a new optimal complex gain setting is re-determined, and the control method returns to Step S53.

While the disclosure has been described by way of example and in terms of the preferred embodiments, it is to be understood that the disclosure is not limited to the disclosed embodiments. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A transmitter (1) comprising:
a plurality of transmission paths (12, 13), each of which comprises a corresponding antenna (125, 135);
a configure module (10), configured to obtain a communication-related indicator during the transmitter (1) operating in a multi-path transmission mode, in which multiple transmission paths among the plurality of transmission paths (12, 13) are enabled, and adaptively generate configuration information (D 10) in response to changes of the communication-related indicator for dynamically adjusting a complex gain setting of the multiple transmission paths, wherein the complex gain setting comprises at least one gain value and at least one phase value; and
a control module (11), configured to receive input data (DIN) and the configuration information (D10), and generate corresponding transmission data (DOUT30, DOUT31) for the multiple transmission paths according to the input data (DIN) and the configuration information (D10).

2. A control method for a transmitter which comprises a plurality of transmission paths, comprising:
obtaining a communication-related indicator during the transmitter operating in a multi-path transmission mode, in which multiple transmission paths among the plurality of transmission paths are enabled, and adaptively generate configuration information in response to changes of the communication-related indicator for dynamically adjusting the complex gain setting of the multiple transmission paths, wherein the complex gain setting comprises at least one gain value and at least one phase value (S41); and
generating corresponding transmission data for the multiple transmission paths according to received input data and the configuration information (S42).

3. The transmitter (1) as claimed in claim 1, wherein:
the configure module (10) is further configured to determine whether a predetermined condition is met according to the communication-related indicator, and
in response to that the predetermined condition is met, the configure module (10) is further configured to control the transmitter (1) to enter a dynamic adjustment stage to adjust the complex gain setting at the dynamic adjustment stage;
or
the control method as claimed in claim 2, further comprising:
determining whether a predetermined condition is met according to the communication-related indicator, and
in response to that the predetermined condition is met, controlling the transmitter to enter a dynamic adjustment stage to adjust the complex gain setting at the dynamic adjustment stage.

4. The transmitter (1) or the control method as claimed in claim 3, wherein the predetermined condition comprises at least one condition for either or both of a performance degradation detection and a regular check, wherein the communication-related indicator for the predetermined condition comprises at least one channel-related parameter.

5. The transmitter (1) or the control method as claimed in claim 4, wherein the at least one channel-related parameter comprises a throughput or a block error rate, and the predetermined condition for the performance degradation detection comprises a variation of the throughput is less than a corresponding threshold in consecutive M times or a variation of the block error rate is larger than another corresponding threshold in consecutive M times, wherein M is an integer greater than 1.

6. The transmitter (1) or the control method as claimed in claim 5, wherein the predetermined condition for the regular check comprises a variation of the throughput is larger than a corresponding threshold N times cumulatively or a variation of the block error rate is less than another corresponding threshold in N times cumulatively, wherein N is an integer greater than M.

7. The transmitter (1) as claimed in any one of claims 1 and 3 to 6, wherein the configure module (10) is further configured to determine whether a predetermined condition is met according to a power indicator and a corresponding threshold, and
in response to that the first predetermined condition is met, the configure module (10) is further configured to control the transmitter (1) to operate in the multi-path transmission mode;
or
the control method as claimed in any one of claims 2 to 6, further comprising:
determining whether a predetermined condition is met according to a power indicator and a corresponding threshold, and
in response to that the predetermined condition is met, controlling the transmitter to operate in the multi-path transmission mode.

8. The transmitter (1) as claimed in claim 7, wherein the configure module (10) is further configured to determine another predetermined condition is met according to the power indicator and another corresponding threshold different from the corresponding threshold, and
in response to that another predetermined condition is met, the configure module (10) is further configured to control the transmitter (1) to operate in a single-path transmission mode;
or
the control method as claimed in claim 7, further comprising:
determining another predetermined condition is met according to the power indicator and another corresponding threshold different from the corresponding threshold, and
in response to that another predetermined condition is met, controlling the transmitter to operate in a single-path transmission mode.

9. The transmitter (1) as claimed in any one of claims 3 to 8, wherein at the dynamic adjustment stage, the configure module (10) is further configured to adjust the complex gain setting and accordingly obtain respective performance indicator, wherein the complex gain setting with best performance indicator is determined as an optimal complex gain setting of the multi-path transmission mode;
or
the control method as claimed in any one of claims 3 to 8, further comprising:
at the dynamic adjustment stage, adjusting the complex gain setting and accordingly obtaining respective performance indicator, wherein the complex gain setting with best performance indicator is determined as an optimal complex gain setting of the multi-path transmission mode.

10. The transmitter (1) as claimed in any one of claims 1 and 3 to 9, wherein:
the control module (11) is further configured to determine gains of the transmission data (DOUT30, DOUT31) according to the at least one gain value of the complex gain setting indicated by the configuration information (D10) and/or further configured to determine phase values of the transmission data (DOUT30, DOUT31) according to the at least one phase value of the complex gain setting indicated by the configuration information (D10);
or
the control method as claimed in any one of claims 2 to 9, further comprising:
determining gains of the transmission data according to the at least one gain value of the complex gain setting indicated by the configuration information and/or determining phase values of the transmission data according to the at least one phase value of the complex gain setting indicated by the configuration information.

11. The transmitter (1) as claimed in claim 10, wherein:
the configure module (10) is further configured to determine the at least one gain value of the complex gain setting through calculation related power sharing setting or through a look-up table according to at least one communication-related parameter, and
the configure module (10) is further configured to determine the at least one phase value of the complex gain setting through calculation related phase setting or through a look-up table according to at least one communication-related parameter;
or
the control method as claimed in claim 10, further comprising:
determining the at least one gain value of the complex gain setting through calculation related power sharing setting or through a look-up table according to at least one communication-related parameter, and
determining the at least one phase value of the complex gain setting through calculation related phase setting or through a look-up table according to at least one communication-related parameter.
